# EUROPÄISCHE PATENTSCHRIFT

(11) **EP 2 071 805 B1**
(45) Veröffentlichungstag und Bekanntmachung des Hinweises auf die Patenterteilung: **14.06.2017**
(21) Anmeldenummer: 08021132.9
(22) Anmeldetag: 05.12.2008
(51) Int. Cl.: B60T 17/22, H04W 40/32, H04W 84/00, H04W 48/16, B61L 15/00, B60T 13/66, H04W 84/18, H04L 29/08

(54) **Verfahren zur Identifikation von Funk-Kommunikationseinrichtungen in einem Ad-hoc-Netzwerk**
Method for identifying radio communication devices in an ad-hoc network
Procédé d'identification de dispositifs de communication radio dans un réseau ad hoc

(30) Priorität: 14.12.2007 DE 102007060269
(43) Veröffentlichungstag der Anmeldung: 17.06.2009
(73) Patentinhaber: KNORR-BREMSE Systeme für Schienenfahrzeuge GmbH, 80809 München (DE)
(72) Erfinder: WALTER, Manfred, 85375 Neufahrn (DE); HEINE, Christoph, 80995 München (DE)
(74) Vertreter: Schönmann, Kurt

(56) Entgegenhaltungen:
- EP-A1- 1 013 533
- EP-A1- 1 672 560
- EP-A1- 1 838 051
- EP-A2- 2 000 387
- DE-A1-102004 028 390

## Beschreibung

Die Erfindung betrifft ein Verfahren zur Identifikation von Funk-Kommunikationseinrichtungen in einem Ad-hoc-Netzwerk, und bezieht sich insbesondere auf Verfahren zur Identifikation von in einem Ad-hoc-Netzwerk drahtlos miteinander in Verbindung stehenden Funk-Kommunikationsgeräten derart, dass eine Zugehörigkeit zu einer Gruppe solcher Geräte erfasst werden kann.

Seit einiger Zeit werden verbreitet drahtlose Netzwerke zur Kommunikation zwischen Sendern und Empfängern, die sich an verteilten Orten befinden, eingesetzt. Eine Form eines populären drahtlosen Netzwerks ist hierbei ein Ad-hoc-Netzwerk, in welchem zwei oder mehr Geräte, die als Netzknoten bezeichnet werden, ohne feste Infrastruktur zu einem vermaschten Netz verbunden sind. Manche Arten solcher Netzwerke können sich selbständig aufbauen, konfigurieren und beständig anpassen, wenn sich Netzknoten bewegen, hinzukommen oder ausfallen.

Beispielsweise befindet sich eine spezielle Form eines Ad-hoc-Netzwerks, ein als VANet (Vehicular Ad Hoc Network) bezeichnetes Netzwerk, derzeit in einem frühen Entwicklungsstadium. In einem Netzwerk dieser Art sind die Netzknoten einzelne Fahrzeuge, beispielsweise Kraftfahrzeuge, und auch hierbei handelt es sich um ein selbstorganisierendes und dezentrales Netzwerk.

Netzknoten können Funk-Kommunikationsgeräte sein, die aktiv oder passiv als so genannte Transponder (zusammengesetzt aus engl. Transmitter und *Responder)* arbeiten und ankommende Signale entgegennehmen und automatisch beantworten.

Drahtlose Ad-hoc-Netzwerke weisen unter anderem den Vorteil auf, dass Vernetzungen zwischen einzelnen Netzknoten spontan erfolgen können, und dass in dem Netzwerk verbundene Transponder sowohl eigene Daten übermitteln als auch, unter Verwendung von beispielsweise Routingprotokollen, von anderen in dem Netzwerk verbundenen Transpondern stammende Daten weiterleiten können. Benachbarte Transponder können auch nachträglich in ein bestehendes Ad-hoc-Netzwerk aufgenommen werden, sofern das verwendete Netzwerkprotokoll und die Funkreichweite dies erlauben, und/oder verbundene Transponder können wieder aus einer bestehenden Vernetzung herausfallen, ohne die Funktionsfähigkeit des verbleibenden Netzwerks grundsätzlich zu gefährden, so dass ein Ad-hoc-Netzwerk eine gute Robustheit und Funktionssicherheit aufweist.

Dennoch kann es aus funktionellen Gründen erwünscht oder erforderlich sein, eine beliebige selbstorganisierende Vernetzung von sich innerhalb der Funkreichweite befindenden und dasselbe oder ein kompatibles Protokoll verwendenden gleichartigen Transpondern zu unterbinden, und Gruppen von Transpondern zu bilden, zu unterscheiden und voneinander zu trennen.

Die Druckschrift EP-A-1 013 533 und die Stand der Technik nach Art. 54(3) EPÜ bildende Druckschrift EP-A-2 000 387 offenbaren jeweils Verfahren und Systeme mit den Merkmalen des Oberbegriffs der Patentansprüche 1 und 10.

Der Erfindung liegt daher als eine Aufgabe zugrunde, ein Verfahren und ein System bereitzustellen, mittels welchen innerhalb eines bestehenden Ad-hoc-Netzwerks eine Gruppe einiger drahtlos verbundener, zusammengehöriger Transponder als solche identifizierbar ist, und/oder andere, sich in Reichweite befindende und mit kompatiblen Netzwerkparametern arbeitende Transponder, die nicht Mitglieder einer derartigen Gruppe sein sollen, als solche kennzeichenbar sind.

Diese Aufgabe wird erfindungsgemäß durch die kennzeichnenden Merkmale eines Verfahrens gemäß Patentanspruch 1 und eines Systems gemäß Patentanspruch 10 gelöst. Vorteilhafte Weiterbildungen der Erfindung sind Gegenstand der beigefügten Unteransprüche.

Im Einzelnen ist somit ein Verfahren zur Identifikation von Funk-Kommunikationseinrichtungen in einem drahtlosen Ad-hoc-Netzwerk gekennzeichnet durch die Schritte:
- Koppeln zumindest zweier Objekte, in welchen jeweils eine Funk-Kommunikationseinrichtung angeordnet ist, mittels einer physikalischen Verbindungsleitung zu einer Gruppe zusammengehörender Objekte;
- Verbinden jeder Funk-Kommunikationseinrichtung der zu einer Gruppe gehörenden Objekte über einen in jeder jeweiligen Funk-Kommunikationseinrichtung angeordneten Sensor mit der physikalischen Verbindungsleitung;
- Erfassen eines über die physikalische Verbindungsleitung übermittelten Signals an jedem mit der physikalischen Verbindungsleitung verbundenen Sensor;
- Weiterleiten des an jedem Sensor erfassten Signals über dessen Funk-Kommunikationseinrichtung in das drahtlose Ad-hoc-Netzwerk; und
- Identifizieren der über die Sensoren mit der physikalischen Verbindungsleitung verbundenen Funk-Kommunikationseinrichtungen als zu der Gruppe zusammengehörender Objekte gehörend.

Vorteilhaft erfolgt ein Herstellen drahtloser Verbindungen in dem Ad-hoc-Netzwerk nur zwischen den Funk-Kommunikationseinrichtungen der Gruppe zusammengehörender Objekte.

Bevorzugt sind hierbei die Funk-Kommunikationseinrichtungen Transponder.

Weiter bevorzugt wird den Funk-Kommunikationseinrichtungen in der Gruppe zusammengehörender Objekte über die physikalische Verbindungsleitung dasselbe zu erfassende Signal übermittelt.

Anhand des übermittelten und erfassten Signals wird vorteilhaft dadurch zwischen zu der Gruppe zusammengehörender Objekte gehörenden Funk-Kommunikationseinrichtungen und nicht zu dieser Gruppe gehörenden Funk-Kommunikationseinrichtungen unterschieden, dass zu der Gruppe zusammengehörender Objekte gehörende Funk-Kommunikationseinrichtungen als solche identifiziert werden und/oder nicht zu dieser Gruppe gehörende Funk-Kommunikationseinrichtungen als solche gekennzeichnet werden.

In bevorzugten Ausführungsformen kann die physikalische Verbindungsleitung mechanisch, pneumatisch, elektrisch, optisch oder als eine Kombination solcher Verbindungsleitungen ausgeführt werden und beispielsweise eine Hauptluftleitung eines aus mehreren beweglichen Objekten bestehenden beweglichen Gesamtobjekts sein.

Ist die physikalische Verbindungsleitung eine Hauptluftleitung, kann vorteilhaft das zu erfassende Signal ein Entlüften oder Belüften dieser Hauptluftleitung sein.

Vorteilhaft ist ferner das bewegliche Gesamtobjekt ein Schienenzug oder ein aus einem Motorfahrzeug und zumindest einem Anhänger bestehendes Fahrzeuggespann.

Vorteile ergeben sich insbesondere, wenn als die Funk-Kommunikationseinrichtungen jeweils gleichartige Funk-Kommunikationseinrichtungen verwendet werden.

Ferner ist ein System zur Identifikation von Funk-Kommunikationseinrichtungen in einem drahtlosen Ad-hoc-Netzwerk, das zur Ausführung des vorstehenden Verfahrens geeignet ist, gekennzeichnet durch:
- zumindest zwei Objekte, in welchen jeweils eine Funk-Kommunikationseinrichtung angeordnet ist und die mittels einer physikalischen Verbindungsleitung zu einer Gruppe zusammengehörender Objekte gekoppelt sind;
- einen in jeder jeweiligen Funk-Kommunikationseinrichtung angeordneten Sensor, über den jede Funk-Kommunikationseinrichtung der zu einer Gruppe gehörenden Objekte mit der physikalischen Verbindungsleitung verbunden ist, zum Erfassen eines über die physikalische Verbindungsleitung übermittelten Signals,
wobei jede Funk-Kommunikationseinrichtung das an ihrem Sensor erfasste Signal in das drahtlose Ad-hoc-Netzwerk weiterleitet, und das drahtlose Ad-hoc-Netzwerk die über die Sensoren mit der physikalischen Verbindungsleitung verbundenen Funk-Kommunikationseinrichtungen als zu der Gruppe zusammengehörender Objekte gehörend identifiziert und drahtlose Verbindungen nur zwischen den Funk-Kommunikationseinrichtungen der Gruppe zusammengehörender Objekte herstellt.

Ein solches System umfasst hierzu bevorzugt die vorstehend erwähnten Elemente und Komponenten.

Die Erfindung wird nachstehend anhand eines bevorzugten Ausführungsbeispiels unter Bezugnahme auf die beigefügten Zeichnungen näher beschrieben. Es zeigen:
Fig. 1 beispielhaft und vereinfacht eine Anzahl von zu einzelnen Gruppen gekoppelten beweglichen Objekten mit jeweils einem Transponder, die als Gruppen jedoch voneinander getrennt sind;
Fig. 2 einen sich einstellenden Zustand in einem Ad-hoc-Netzwerk, wenn sich die Transponder der beweglichen Objekte aus Fig. 1 in gegenseitiger Reichweite befinden und sich ein Vernetzungszustand zwischen den einzelnen Transpondem einstellt; und
Fig. 3 einen sich einstellenden Zustand in dem Ad-hoc-Netzwerk aus Fig. 2 gemäß dem Ausführungsbeispiel des Verfahrens zur Identifikation von Funk-Kommunikationsgeräten.

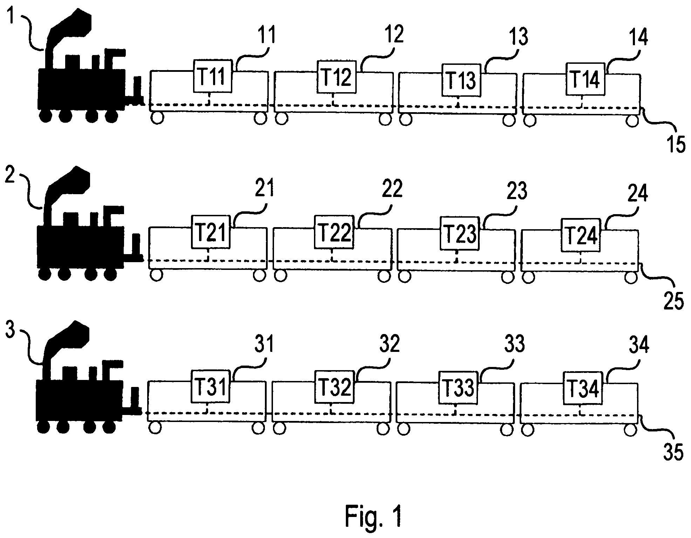

Fig. 1 zeigt vereinfacht eine Anzahl von zu einzelnen Gruppen gekoppelten beweglichen Objekten, dargestellt in Form von beispielsweise drei Zügen oder Schienenzügen mit jeweils einer Lokomotive 1, 2, 3 und einer zugehörigen Anzahl von Wagen 11 bis 14, 21 bis 24, 31 bis 34, die gruppenweise mit einer entsprechenden der Lokomotiven 1, 2, 3 gekoppelt sind. Die Wagen 11 bis 14, 21 bis 24 und 31 bis 34 weisen jeweils einen Transponder T11 bis T14, T21 bis T24, T31 bis T34 als Funk-Kommunikationsgerät oder Funk-Kommunikationseinrichtung auf.

Die einzelnen Transponder T11 bis T14, T21 bis T24, T31 bis 34 in den einzelnen Zügen 1 und 11 bis 14, 2 und 21 bis 24 und 3 und 31 bis 34 sind insofern gleichartig aufgebaut, dass sie mit denselben, zumindest jedoch kompatiblen Netzwerkparametem, wie beispielsweise Protokollen, Frequenzen, Initialisierungsprozeduren, Kommunikationssequenzen und dergleichen arbeiten. Die Transponder T11 bis T14, T21 bis T24, T31 bis T34 sind mit vorbestimmten (nicht gezeigten) Sensoren versehen und sind ferner, wie durch eine durchbrochene Linie schematisch dargestellt, in einem jeweiligen der Züge 1 und 11 bis 14, 2 und 21 bis 24 und 3 und 31 bis 34 innerhalb ihrer eigenen Gruppe von Transpondem T11 bis T14, T21 bis T24 oder T31 bis T34, die zusammengehören sollen, über diese vorbestimmten Sensoren zusätzlich zu der drahtlosen Verbindung untereinander mit einer gemeinsamen, festen physikalischen Verbindungsleitung 15, 25 bzw. 35 verbunden.

Diese gemeinsame feste physikalische Verbindungsleitung 15, 25, 35 kann beispielsweise eine Hauptluftleitung des jeweiligen Zugs sein, jedoch ohne darauf beschränkt zu sein, alternativ auch mechanisch, anderweitig pneumatisch, elektrisch oder optisch oder als eine Kombination solcher Ausführungsformen ausgestaltet sein.

Sind die drei Züge 1 und 11 bis 14, 2 und 21 bis 24 und 3 und 31 bis 34 so weit voneinander entfernt, dass sich zwar die einzelnen Transponder T11 bis T14, T21 bis T24, T31 bis T34 in den Wagen 11 bis 14, 21 bis 24, 31 bis 34 eines Zuges innerhalb ihrer eigenen Funkreichweite, aber außerhalb der Funkreichweite zu den Transpondem eines der anderen Züge 1 und 11 bis 14, 2 und 21 bis 24 und 3 und 31 bis 34 befinden, wird während des Betriebs, d. h. während eines bestehenden Verbindungszustands, ein drahtloses Ad-hoc-Netzwerk nur innerhalb der jeweils zu einem der Züge 1 und 11 bis 14, 2 und 21 bis 24 und 3 und 31 bis 34 gehörenden Gruppe von Transpondem T11 bis T14, T21 bis T24 oder T31 bis T34 aufgebaut und unterhalten.

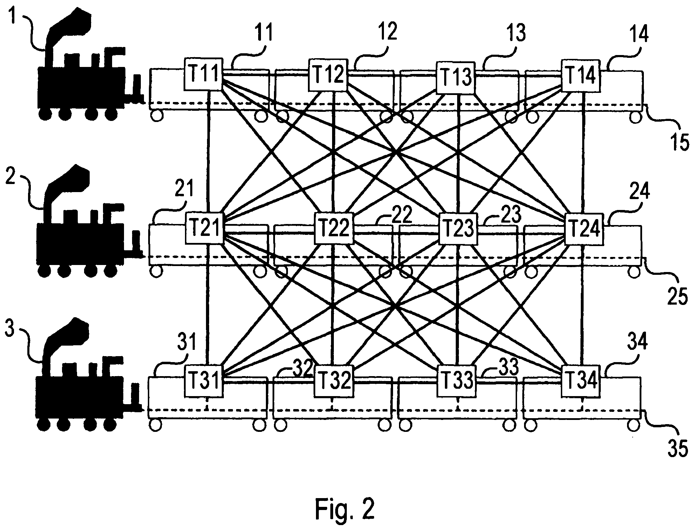

Als Nächstes zeigt Fig. 2 einen sich einstellenden Zustand in dem vorstehend beschriebenen Ad-hoc-Netzwerk, wenn sich die Transponder T11 bis T14, T21 bis T24, T31 bis T34 der beweglichen Objekte aus Fig. 1 in gegenseitiger Reichweite befinden und sich zunächst ein drahtloses Ad-hoc-Netzwerk mit einem wechselseitigen Vernetzungszustand zwischen den einzelnen Transpondem T11 bis T14, T21 bis T24, T31 bis T34 einstellt. Dieser wechselseitige Vernetzungszustand ist in Fig. 2 mittels durchgezogenen Linien zwischen den Transpondem T11 bis T14, T21 bis T24, T31 bis T34 dargestellt.

Eine derartige Situation kann im Fall der zur Erklärung dargestellten Züge 1 und 11 bis 14, 2 und 21 bis 24 und 3 und 31 bis 34 beispielsweise eintreten, wenn sich die Züge 1 und 11 bis 14, 2 und 21 bis 24 und 3 und 31 bis 34 mit den jeweils gleichartigen Transpondem T11 bis T14, T21 bis T24, T31 bis T34 in einem Bahnhof auf nahe zueinander benachbarten Gleisen befinden.

Da das Ad-hoc-Netzwerk selbstorganisierend ist, die Transponder T11 bis T14, T21 bis T24, T31 bis T34 eintreffende Signale entgegennehmen und automatisch beantworten, und Vernetzungen zwischen den einzelnen Transpondem T11 bis T34, T21 bis T24, T31 bis T34, d. h. den Funk-Kommunikationseinrichtungen, spontan erfolgen, werden auch Transponder benachbarter Züge wechselseitig in ein resultierendes, zumindest temporäres Gesamtnetzwerk aufgenommen. Mit anderen Worten entstehen Verbindungen zwischen jedem der sich in Reichweite befindenden Transponder T11 bis T14, T21 bis T24, T31 bis T34, d. h. entsteht eine unerwünschte und unzweckmäßige Vernetzung zwischen den einzelnen Zügen 1 und 11 bis 14, 2 und 21 bis 24 und 3 und 31 bis 34 auf benachbarten Gleisen und damit einher gehend nachteilig eine höhere Gesamtbelastung des gesamten Netzwerks, eine geringere Datenübertragungsrate aufgrund des auftretenden Datenvolumens in einzelnen Kanälen, und/oder ein unerwünschter und zu unterdrückender Datenverkehr zwischen den einzelnen, an sich unabhängigen Teilnetzen der Transpondergruppen in jedem Zug.

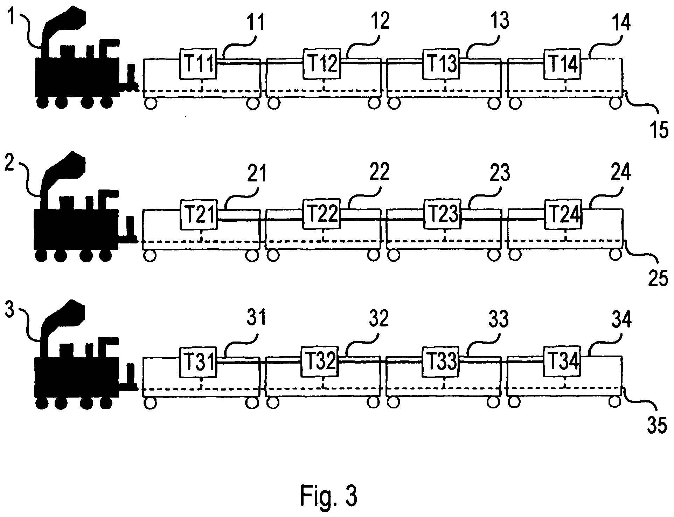

Zur Vermeidung der in Fig. 2 dargestellten Situation zeigt Fig. 3 einen sich einstellenden Zustand in dem Ad-hoc-Netzwerk aus Fig. 2 gemäß dem Ausführungsbeispiel des Verfahrens zur Identifikation von Funk-Kommunikationseinrichtungen bzw. Transpondem.

Denn da, wie in Fig. 1 gezeigt ist und vorstehend beschrieben wurde, die Transponder T11 bis T14, T21 bis T24, T31 bis T34 zusätzlich zu der drahtlosen Verbindung über das Ad-hoc-Netzwerk mit der in jeweils jedem der Züge 1 und 11 bis 14, 2 und 21 bis 24 und 3 und 31 bis 34 bereitgestellten gemeinsamen, festen physikalischen Verbindungsleitung 15, 25, 35 in Verbindung stehen, wird über diese feste physikalische Verbindungsleitung 15, 25, 35 ein zusätzliches Signal oder Identifikationssignal nur an diejenigen Transponder T11 bis T14, T21 bis T24, T31 bis T34 übermittelt, die in einem der Züge 1 und 11 bis 14, 2 und 21 bis 24 und 3 und 31 bis 34 an diese Leitung angeschlossen sind.

Hierbei kann das zusätzliche Signal beispielsweise ein Entlüften oder ein Belüften der Hauptluftleitung, aber in Abhängigkeit von einer tatsächlichen Ausgestaltung der Verbindungsleitung auch ein beliebiges anderes, geeignetes Signal sein. Das zusätzliche Signal wird sodann von den (nicht gezeigten) Sensoren in den einzelnen Transpondem T11 bis T14, T21 bis T24, T31 bis T34 einer der durch die festen physikalischen Verbindungsleitungen 15, 25, 35 Leitungen definierten Transpondergruppen erfasst und über die Transponder zur eindeutigen Identifikation der zu einer gewünschten Transpondergruppe gehörenden Transponder T11 bis T14 oder T21 bis T24 oder T31 bis T34 in das drahtlose Ad-hoc-Netzwerk geleitet, d. h. an das Netzwerk weiterbestätigt, wie in Fig. 3 mittels durchgezogenen Linien zwischen den Transpondem T11 bis T14 oder T21 bis T24 oder T31 bis T34 einer so jeweils gebildeten Gruppe dargestellt ist, so dass diese dadurch innerhalb des Netzwerks als solche Transponder identifizierbar sind, die an die gemeinsame, feste physikalische Verbindungsleitung 15 oder 25 oder 35 angeschlossen sind und somit zum selben Zug (1 und 11 bis 14) oder (2 und 21 bis 24) oder (3 und 31 bis 34) bzw. zur selben Gruppe gehören. Fig. 3 ist darüber hinaus entnehmbar, dass auf diese Art und Weise keine spontanen Ad-hoc-Verbindungen zu sich in Funkreichweite befindenden Transpondem anderer Gruppen hergestellt werden.

Es wird angemerkt, dass zur eindeutigen Identifikation von zu einem bestimmten Zug gehörenden Transpondem einer bestimmten Transpondergruppe und zur Unterscheidung derselben von fremden Transpondem oder Transpondergruppen eines anderen Zugs natürlich für jede gemeinsame, feste physikalische Verbindungsleitung 15, 25, 35 bzw. Transpondergruppe T11 bis T14, T21 bis T24, T31 bis T34 ein jeweils eindeutiges zusätzliches Signal erzeugt und gruppenweise unterscheidbar an das Netzwerk bestätigt werden muss, obwohl nach wie vor das Ad-hoc-Netzwerk aus einer kompatiblen Vernetzung gleichartiger Transponder T11 bis T14, T21 bis T24, T31 bis T34 besteht.

Es ist somit möglich, Transponder eindeutig zu identifizieren, indem Transponder, die zu einer zu bildenden Gruppe gehören, mit einer physikalischen Verbindungsleitung in Verbindung stehen, über die dieser Gruppe ein Signal übermittelt wird, welches es erlaubt, die zu der Gruppe gehörenden Transponder von den nicht zu der Gruppe gehörenden Transpondern zu unterscheiden.

Somit wurde ein Verfahren zur Identifikation von Funk-Kommunikationseinrichtungen in einem drahtlosen Ad-hoc-Netzwerk vorgeschlagen, umfassend die Schritte des Koppelns zumindest zweier Objekte 11 bis 14, 21 bis 24, 31 bis 34, in welchen jeweils eine Funk-Kommunikationseinrichtung T11 bis T14, T21 bis T24, T31 bis T34 angeordnet ist, mittels einer physikalischen Verbindungsleitung 15, 25, 35 zu einer Gruppe zusammengehörender Objekte, des Verbindens jeder Funk-Kommunikationseinrichtung T11 bis T14, T21 bis T24, T31 bis T34 der zu einer Gruppe gehörenden Objekte 11 bis 14, 21 bis 24 und 31 bis 34 über einen in jeder jeweiligen Funk-Kommunikationseinrichtung T11 bis T14, T21 bis T24, T31 bis T34 angeordneten Sensor mit der physikalischen Verbindungsleitung 15, 25, 35, des Erfassens eines über die physikalische Verbindungsleitung 15, 25, 35 übermittelten Signals an jedem mit der physikalischen Verbindungsleitung 15, 25, 35 verbundenen Sensor, des Weiterleitens des an jedem Sensor erfassten Signals über dessen Funk-Kommunikationseinrichtung T11 bis T14, T21 bis T24, T31 bis T34 in das drahtlose Ad-hoc-Netzwerk, des Identifizierens der über die Sensoren mit der physikalischen Verbindungsleitung 15, 25, 35 verbundenen Funk-Kommunikationseinrichtungen T11 bis T14, T21 bis T24, T31 bis T34 als zu der Gruppe zusammengehörender Objekte gehörend, und des Herstellens drahtloser Verbindungen in dem Ad-hoc-Netzwerk nur zwischen den Funk-Kommunikationseinrichtungen T11 bis T14, T21 bis T24, T31 bis T34 der Gruppe zusammengehörender Objekte. Ein System zur Ausführung des Verfahrens umfasst die hierzu notwendigen Komponenten.

Die Erfindung ist selbstverständlich nicht auf eine Anwendung in Zügen, Bahnen oder eine Reihe von miteinander gekoppelten Fahrzeugen, Gespannen oder anderen beweglichen Objekten beschränkt, sondern ohne Weiteres auch auf eine beliebige verteilte Anordnung von Funk-Kommunikationsgeräten übertragbar, solange solche Geräte gruppenweise mit einer gemeinsamen, festen physikalischen Leitung verbindbar sind und ein Signal zur Identifikation und Unterscheidung einzelner Gruppen solcher Geräte an den Funk-Kommunikationsgeräten erfassbar und in das bestehende drahtlose Netzwerk einsteuerbar ist. Derartige Modifikationen und Anwendungen sind für den Fachmann offensichtlich und liegen daher im Rahmen des Schutzumfangs der Erfindung.

## Patentansprüche

1. Verfahren zur Identifikation von Funk-Kommunikationseinrichtungen in einem drahtlosen Ad-hoc-Netzwerk, mit den Schritten:
- Koppeln zumindest zweier Objekte (11 bis 14, 21 bis 24, 31 bis 34), in welchen jeweils eine Funk-Kommunikationseinrichtung (T11 bis T14, T21 bis T24, T31 bis T34) angeordnet ist, mittels einer physikalischen Verbindungsleitung (15, 25, 35) zu einer Gruppe (11 bis 14; 21 bis 24; 31 bis 34) zusammengehörender Objekte;
- Verbinden jeder jeweiligen Funk-Kommunikationseinrichtung (T11 bis T14, T21 bis T24, T31 bis T34) der zu einer Gruppe (11 bis 14; 21 bis 24; 31 bis 34) gehörenden Objekte über einen Sensor, mit dem jede Funk-Kommunikationseinrichtung versehen ist, mit der physikalischen Verbindungsleitung (15, 25, 35);
- Erfassen eines über die physikalische Verbindungsleitung (15, 25, 35) übermittelten Signals an jedem mit der physikalischen Verbindungsleitung (15, 25, 35) verbundenen Sensor; und
- Identifizieren der über die Sensoren mit der physikalischen Verbindungsleitung (15, 25, 35) verbundenen Funk-Kommunikationseinrichtungen (T11 bis T14, T21 bis T24, T31 bis T34) als zu der Gruppe (11 bis 14; 21 bis 24; 31 bis 34) zusammengehörender Objekte gehörend,
**dadurch gekennzeichnet, dass**
- das an jedem Sensor erfasste Signal über dessen Funk-Kommunikationseinrichtung (T11 bis T14, T21 bis T24, T31 bis T34) in das drahtlose Ad-hoc-Netzwerk weitergeleitet wird; und
- anhand des weitergeleiteten erfassten Signals zwischen zu der Gruppe zusammengehörender Objekte gehörenden Funk-Kommunikationseinrichtungen (T11 bis T14, T21 bis T24, T31 bis T34) und nicht zu dieser Gruppe gehörenden Funk-Kommunikationseinrichtungen (T21 bis T24, T31 bis T34; T11 bis T14, T31 bis T34; T11 bis T14, T21 bis T24) dadurch unterschieden wird, dass zu der Gruppe zusammengehörender Objekte gehörende Funk-Kommunikationseinrichtungen als zu der Gruppe gehörend identifiziert werden und nicht zu dieser Gruppe gehörende Funk-Kommunikationseinrichtungen als nicht zu dieser Gruppe gehörend gekennzeichnet werden.

2. Verfahren nach Anspruch 1, **dadurch gekennzeichnet, dass** drahtlose Verbindungen in dem Ad-hoc-Netzwerk nur zwischen den Funk-Kommunikationseinrichtungen (T11 bis T14, T21 bis T24, T31 bis T34) der Gruppe (11 bis 14; 21 bis 24; 31 bis 34) zusammengehörender Objekte hergestellt werden.

3. Verfahren nach Anspruch 1, **dadurch gekennzeichnet, dass** die Funk-Kommunikationseinrichtung ein Transponder (T11 bis T14, T21 bis T24, T31 bis T34) ist.

4. Verfahren nach Anspruch 1, **dadurch gekennzeichnet, dass** der Gruppe (11 bis 14; 21 bis 24; 31 bis 34) von zusammengehörenden Funk-Kommunikationseinrichtungen (T11 bis T14, T21 bis T24, T31 bis T34) in einer Gruppe zusammengehörender Objekte über die physikalische Verbindungsleitung (15, 25, 35) dasselbe zu erfassende Signal übermittelt wird.

5. Verfahren nach Anspruch 1, **dadurch gekennzeichnet, dass** die physikalische Verbindungsleitung (15, 25, 35) mechanisch, pneumatisch, elektrisch, optisch oder eine Kombination solcher Verbindungsleitungen ausgeführt wird.

6. Verfahren nach Anspruch 1, **dadurch gekennzeichnet, dass** die physikalische Verbindungsleitung (15, 25, 35) als eine Hauptluftleitung eines aus mehreren beweglichen Objekten (1 und 11 bis 14, 2 und 21 bis 24, 3 und 31 bis 34) bestehenden beweglichen Gesamtobjekts ausgeführt wird.

7. Verfahren nach Anspruch 6, **dadurch gekennzeichnet, dass** das zu erfassende Signal ein Entlüften oder Belüften der Hauptluftleitung ist.

8. Verfahren nach Anspruch 6, **dadurch gekennzeichnet, dass** das bewegliche Gesamtobjekt ein Schienenzug oder ein aus einem Motorfahrzeug und zumindest einem Anhänger bestehendes Fahrzeuggespann ist.

9. Verfahren nach Anspruch 1, **dadurch gekennzeichnet, dass** als die Funk-Kommunikationseinrichtungen (T11 bis T14, T21 bis T24, T31 bis T34) jeweils gleichartige Funk-Kommunikationseinrichtungen verwendet werden.

10. System zur Identifikation von Funk-Kommunikationseinrichtungen in einem drahtlosen Ad-hoc-Netzwerk, beinhaltend:
- zumindest zwei Objekte (11 bis 14, 21 bis 24, 31 bis 34), in welchen jeweils eine Funk-Kommunikationseinrichtung (T11 bis T14, T21 bis T24, T31 bis T34) angeordnet ist und die mittels einer physikalischen Verbindungsleitung (15, 25, 35) zu einer Gruppe (11 bis 14; 21 bis 24; 31 bis 34) zusammengehörender Objekte gekoppelt sind;
- einen Sensor, mit dem jede Funk-Kommunikationseinrichtung (T11 bis T14, T21 bis T24, T31 bis T34) versehen ist und über den jede Funk-Kommunikationseinrichtung der zu einer Gruppe (11 bis 14; 21 bis 24; 31 bis 34) gehörenden Objekte mit der physikalischen Verbindungsleitung (15, 25, 35) verbunden ist, zum Erfassen eines über die physikalische Verbindungsleitung (15, 25, 35) übermittelten Signals, wobei
- das drahtlose Ad-hoc-Netzwerk die über die Sensoren mit der physikalischen Verbindungsleitung (15, 25, 35) verbundenen Funk-Kommunikationseinrichtungen als zu der Gruppe (11 bis 14; 21 bis 24; 31 bis 34) zusammengehörender Objekte gehörend identifiziert,
**dadurch gekennzeichnet, dass**
- jede Funk-Kommunikationseinrichtung (T11 bis T14, T21 bis T24, T31 bis T34) das an ihrem Sensor erfasste Signal in das drahtlose Ad-hoc-Netzwerk weiterleitet, und
- anhand des weitergeleiteten erfassten Signals zwischen zu der Gruppe zusammengehörender Objekte gehörenden Funk-Kommunikationseinrichtungen (T11 bis T14, T21 bis T24, T31 bis T34) und nicht zu dieser Gruppe gehörenden Funk-Kommunikationseinrichtungen (T21 bis T24, T31 bis T34; T11 bis T14, T31 bis T34; T11 bis T14, T21 bis T24) dadurch unterschieden wird, dass zu der Gruppe zusammengehörender Objekte gehörende Funk-Kommunikationseinrichtungen als zu der Gruppe gehörend identifiziert werden und nicht zu dieser Gruppe gehörende Funk-Kommunikationseinrichtungen als nicht zu dieser Gruppe gehörend gekennzeichnet werden.

11. System nach Anspruch 10, **dadurch gekennzeichnet, dass** drahtlose Verbindungen nur zwischen den Funk-Kommunikationseinrichtungen (T11 bis T14, T21 bis T24, T31 bis T34) der Gruppe (11 bis 14; 21 bis 24; 31 bis 34) zusammengehörender Objekte hergestellt werden.

12. System nach Anspruch 10, **dadurch gekennzeichnet, dass** die Funk-Kommunikationseinrichtung ein Transponder (T11 bis T14, T21 bis T24, T31 bis T34) ist.

13. System nach Anspruch 10, **dadurch gekennzeichnet, dass** das der Gruppe von zusammengehörenden Funk-Kommunikationseinrichtungen (T11 bis T14, T21 bis T24, T31 bis T34) in der Gruppe (11 bis 14; 21 bis 24; 31 bis 34) zusammengehörender Objekte über die physikalische Verbindungsleitung (15, 25, 35) übermittelte, zu erfassende Signal für alle Funk-Kommunikationseinrichtungen der Gruppe dasselbe Signal ist.

14. System nach Anspruch 10, **dadurch gekennzeichnet, dass** die physikalische Verbindungsleitung (15, 25, 35) eine mechanische, eine pneumatische, eine elektrische, eine optische Verbindungsleitung oder eine Kombination solcher Verbindungsleitungen ist.

15. System nach Anspruch 10, **dadurch gekennzeichnet, dass** die physikalische Verbindungsleitung (15, 25, 35) eine Hauptluftleitung eines aus mehreren beweglichen Objekten (11 bis 14; 21 bis 24; 31 bis 34) bestehenden beweglichen Gesamtobjekts ist.

16. System nach Anspruch 15, **dadurch gekennzeichnet, dass** das zu erfassende Signal ein Entlüften oder Belüften der Hauptluftleitung ist.

17. System nach Anspruch 15, **dadurch gekennzeichnet, dass** das bewegliche Gesamtobjekt ein Schienenzug oder ein aus einem Motorfahrzeug und zumindest einem Anhänger bestehendes Fahrzeuggespann ist.

18. System nach Anspruch 10, **dadurch gekennzeichnet, dass** die Funk-Kommunikationseinrichtungen (T11 bis T14, T21 bis T24, T31 bis T34) jeweils gleichartige Funk-Kommunikationseinrichtungen sind.

## Claims

1. Method for identifying radio communication means in a wireless ad-hoc network, having the steps:
- coupling at least two objects (11 to 14, 21 to 24, 31 to 34), in each of which a radio communication means (T11 to T14, T21 to T24, T31 to T34) is arranged, by means of a physical connection line (15, 25, 35), to a group (11 to 14; 21 to 24; 31 to 34) of associated objects;
- connecting each respective radio communication means (T11 to T14, T21 to T24, T31 to T34) of the objects belonging to a group (11 to 14; 21 to 24; 31 to 34) via a sensor, with which each radio communication means is provided, to the physical connection line (15, 25, 35);
- detecting a signal transmitted via the physical connection line (15, 25, 35) at each sensor connected to the physical connection line (15, 25, 35) and
- identifying the radio communication means (T11 to T14, T21 to T24, T31 to T34) connected via the sensors to the physical connection line (15, 25, 35) as objects belonging to the group (11 to 14; 21 to 24; 31 to 34),
**characterised in that**
- the signal detected at each sensor is forwarded via its radio communication means (T11 to T14, T21 to T24, T31 to T34) into the wireless ad-hoc network; and
- based on the forwarded detected signal, differentiating between radio communication means (T11 to T14, T21 to T24, T31 to T34) belonging to the group of associated objects and radio communication means (T21 to T24, T31 to T34; T11 to T14, T31 to T34; T11 to T14, T21 to T24) not belonging to this group, **in that** radio communication means belonging to the group of associated objects are identified as belonging to the group and radio communication means not belonging to this group are identified as not belonging to this group.

2. Method according to claim 1, **characterised in that** wireless connections are produced in the ad-hoc network only between the radio communication means (T11 to T14, T21 to T24, T31 to T34) of the group (11 to 14; 21 to 24; 31 to 34) of associated objects.

3. Method according to claim 1, **characterised in that** the radio communication means is a transponder (T11 to T14, T21 to T24, T31 to T34).

4. Method according to claim 1, **characterised in that** the same signal to be detected is transmitted to the group (11 to 14; 21 to 24; 31 to 34) of associated radio communication means (T11 to T14, T21 to T24, T31 to T34) in a group of associated objects via the physical connection line (15, 25, 35).

5. Method according to claim 1, **characterised in that** the physical connection line (15, 25, 35) is designed to be mechanical, pneumatic, electric, optical or a combination of such connection lines.

6. Method according to claim 1, **characterised in that** the physical connection line (15, 25, 35) is designed as a main air line of a movable whole object composed of a plurality of movable objects (1 and 11 to 14, 2 and 21 to 24, 3 and 31 to 34).

7. Method according to claim 6, **characterised in that** the signal to be detected is for deaeration or aeration of the main air line.

8. Method according to claim 6, **characterised in that** the movable whole object is a rail vehicle or a vehicle combination consisting of a motor vehicle and at least one trailer.

9. Method according to claim 1, **characterised in that** in each case the same type of radio communication means are used as the radio communication means (T11 to T14, T21 to T24, T31 to T34).

10. System for identifying radio communication means in a wireless ad-hoc network, containing:
- at least two objects (11 to 14, 21 to 24, 31 to 34), in each of which a radio communication means (T11 to T14, T21 to T24, T31 to T34) is arranged, and which are coupled by means of a physical connection line (15, 25, 35) to a group (11 to 14; 21 to 24; 31 to 34) of associated objects;
- a sensor, with which each radio communication means (T11 to T14, T21 to T24, T31 to T34) is provided, and via which each radio communication means of the objects belonging to a group (11 to 14; 21 to 24; 31 to 34) is connected to the physical connection line (15, 25, 35), in order to detect a signal transmitted via the physical connection line (15, 25, 35), wherein
- the wireless ad-hoc network identifies the radio communication means connected via the sensors to the physical connection line (15, 25, 35) as objects belonging to the group (11 to 14; 21 to 24; 31 to 34)
**characterised in that**
- each radio communication means (T11 to T14, T21 to T24, T31 to T34) forwards the signal detected at its sensor into the wireless ad-hoc network, and
- based on the forwarded detected signal, a differentiation is made between radio communication means (T11 to T14, T21 to T24, T31 to T34) belonging to the group of associated objects and radio communication means (T21 to T24, T31 to T34; T11 to T14, T31 to T34; T11 to T14, T21 to T24) not belonging to this group, **in that** radio communication means belonging to the group of associated objects are identified as belonging to the group, and radio communication means not belonging to this group are identified as not belonging to this group.

11. System according to claim 10, **characterised in that** wireless connections are produced only between the radio communication means (T11 to T14, T21 to T24, T31 to T34) of objects belonging to the group (11 to 14; 21 to 24; 31 to 34).

12. System according to claim 10, **characterised in that** the radio communication means is a transponder (T11 to T14, T21 to T24, T31 to T34).

13. System according to claim 10, **characterised in that** the signal to be detected, transmitted via the physical connection lines (15, 25, 35) to the group of associated radio communication means (T11 to T14, T21 to T24, T31 to T34) in the group (11 to 24; 21 to 24; 31 to 34) of associated objects, is the same signal for all radio communication means of the group.

14. System according to claim 10, **characterised in that** the physical connection line (15, 25, 35) is a mechanical, pneumatic, electric, optical connection line or a combination of such connection lines.

15. System according to claim 10, **characterised in that** the physical connection line (15, 25, 35) is a main air line of a movable whole object consisting of a plurality of movable objects (11 to 14; 21 to 24; 31 to 34).

16. System according to claim 15, **characterised in that** the signal to be detected is for deaerating or aerating the main air line.

17. System according to claim 15, **characterised in that** the movable whole object is a rail vehicle or a vehicle combination consisting of a motor vehicle and at least one trailer.

18. System according to claim 10, **characterised in that** the radio communication means (T11 to T14, T21 to T24, T31 to T34) are in each case the same type of radio communication means.

## Revendications

1. Procédé d'identification de dispositifs de communication radio dans un réseau sans fil ad hoc, comprenant les stades :
- couplage d'au moins deux objets (11 à 14, 21 à 24, 31 à 34), dans lesquels est disposé respectivement un dispositif (T11 à T14, T21 à T24, T31 à T34) de communication radio, en un groupe (11 à 14, 21 à 24, 31, à 34) d'objets allant ensemble, au moyen d'une ligne (15, 25, 35) de liaison physique ;
- liaison de chaque dispositif (T11 à T14, T21 à T24, T31 à T34) de communication radio des objets appartenant à un groupe (11 à 14, 21 à 24, 31 à 34), par un capteur dont chaque dispositif de communication radio est pourvu, à la ligne (15, 25, 35) de liaison physique ;
- détection d'un signal transmis par la ligne (15, 25, 35) de liaison physique sur chaque capteur relié à la ligne (15, 25, 35) de liaison physique et
- identification des dispositifs (T11 à T14, T21 à T24, T31 à T34) de communication radio reliés à la ligne (15, 25, 35) de liaison physique par les capteurs, comme appartenant au groupe (11 à 14, 21 à 24, 31 à 34) d'objets allant ensemble,
**caractérisé en ce que**
- on achemine, dans le réseau sans fil ad hoc, le signal détecté sur chaque capteur, par son dispositif (T11 à T14, T21 à T24, T31 à T34) de communication radio et
- à l'aide du signal détecté acheminé, on distingue, entre les dispositifs (T11 à T14, T21 à T24, T31 à T34) de communication radio appartenant au groupe d'objets allant ensemble et des dispositifs (T21 à T24, T31 à T34 ; T11 à T14, T31 à T34 ; T11 à T14, T21 à T24) de communication radio n'appartenant pas à ce groupe, par le fait que des dispositifs de communication radio appartenant au groupe d'objets allant ensemble sont identifiés comme appartenant au groupe et des dispositifs de communication radio n'appartenant pas à ce groupe sont caractérisés comme n'appartenant pas à ce groupe.

2. Procédé suivant la revendication 1, **caractérisé en ce que** l'on ménage des liaisons sans fil dans le réseau ad hoc, seulement entre les dispositifs (T11 à T14, T21 à T24, T31 à T34) de communication radio du groupe (11 à 14, 21 à 24, 31 à 34) des objets allant ensemble.

3. Procédé suivant la revendication 1, **caractérisé en ce que** le dispositif de communication radio est un transpondeur (T11 à T14, T21 à T24, T31 à T34).

4. Procédé suivant la revendication 1, **caractérisé en ce qu'**on transmet le même signal à détecter, par la ligne ((15, 25, 35) de liaison physique, dans un groupe d'objets allant ensemble au groupe (11 à 14, 21 à 24, 31 à 34) de dispositifs (T11 à T14, T21 à T24, T31 à T34) de communication radio allant ensemble.

5. Procédé suivant la revendication 1, **caractérisé en ce que** la ligne (15, 25, 35) de liaison physique est réalisée mécaniquement, pneumatiquement, électriquement, optiquement ou est une combinaison de lignes de liaison de ce genre.

6. Procédé suivant la revendication 1, **caractérisé en ce que** la ligne (15, 25, 35) de liaison physique est réalisée sous la forme d'une ligne d'air principale d'un objet global mobile, constitué de plusieurs objets (1 et 11 à 14, 2 et 21 à 24, 3 et 31 à 34) mobiles.

7. Procédé suivant la revendication 6, **caractérisé en ce que** le signal à détecter est une purge ou une alimentation en air de la ligne d'air principale.

8. Procédé suivant la revendication 6, **caractérisé en ce que** l'objet global mobile est un véhicule ferroviaire ou un train de véhicules constitué d'un véhicule à moteur et d'au moins une remorque.

9. Procédé suivant la revendication 1, **caractérisé en ce qu'**on utilise, comme dispositif (T11 à T14, T21 à T24, T31 à T34) de communication radio, des dispositifs de communication radio de même type.

10. Système d'identification de dispositifs d'identification radio dans un réseau sans fil ad hoc, comportant :
- au moins deux objets (11 à 14, 21 à 24, 31 à 34), dans lesquels est disposé respectivement un dispositif (T11 à T14, T21 à T24, T31 à T34) de communication radio et qui sont couplés, au moyen d'une ligne (15, 25, 35) de liaison physique, en un groupe (11 à 14, 21 à 24, 31 à 34) d'objets allant ensemble ;
- un capteur dont chaque dispositif (T11 à T14, T21 à T24, T31 à T34) de communication radio est pourvu et par lequel chaque dispositif de communication radio des objets appartenant à un groupe (11 à 14, 21 à 24, 31 à 34) est relié à la ligne (15, 25, 35) de liaison physique, pour détecter un signal transmis par la ligne (15, 25, 35) de liaison physique, dans lequel
- le réseau sans fil ad hoc identifie les dispositifs de communication radio reliés à la ligne (15, 25, 35) de liaison physique par l'intermédiaire des capteurs, comme appartenant au groupe (11 à 14, 21 à 24, 31 à 34) d'objets allant ensemble,
**caractérisé en ce que**
- chaque dispositif (T11 à T14, T21 à T24, T31 à T34) de communication radio achemine le signal détecté sur son capteur dans le réseau sans fil ad hoc et
- à l'aide du signal détecté acheminé, on distingue, entre les dispositifs (T11 à T14, T21 à T24, T31 à T34) de communication radio appartenant au groupe d'objets allant ensemble et des dispositifs (T21 à T24, T31 à T34 ; T11 à T14, T31 à T34 ; T11 à T14, T21 à T24) de communication radio n'appartenant pas à ce groupe, par le fait que des dispositifs de communication radio appartenant au groupe d'objets allant ensemble sont identifiés comme appartenant au groupe et des dispositifs de communication radio n'appartenant pas à ce groupe sont caractérisés comme n'appartenant pas à ce groupe.

11. Système suivant la revendication 10, **caractérisé en ce que** l'on ménage des liaisons sans fil dans le réseau ad hoc, seulement entre les dispositifs (T11 à T14, T21 à T24, T31 à T34) de communication radio, du groupe (11 à 14, 21 à 24, 31 à 34) des objets allant ensemble.

12. Système suivant la revendication 10, **caractérisé en ce que** le dispositif de communication radio est un transpondeur (T11 à T14, T21 à T24, T31 à T34).

13. Système suivant la revendication 10, **caractérisé en ce que** le signal à détecter, transmis par la ligne (15, 25, 35) de liaison physique au groupe de dispositif (T11 à T14, T21 à T24, T31 à T34) de communication radio allant ensemble, dans le groupe (11 à 14, 21 à 24, 31 à 34) d'objet allant ensemble, est le même signal pour tous les dispositifs de communication radio.

14. Système suivant la revendication 10, **caractérisé en ce que** la ligne (15, 25, 35) de liaison physique est réalisée mécaniquement, pneumatiquement, électriquement, optiquement ou est une combinaison de lignes de liaison de ce genre.

15. Système suivant la revendication 10, **caractérisé en ce que** la ligne (15, 25, 35) de liaison physique est réalisée sous la forme d'une ligne d'air principale d'un objet global mobile, constitué de plusieurs objets (1 et 11 à 14, 2 et 21 à 24, 3 et 31 à 34) mobiles.

16. Système suivant la revendication 15, **caractérisé en ce que** le signal à détecter est une purge ou une alimentation en air de la ligne d'air principale.

17. Système suivant la revendication 15, **caractérisé en ce que** l'objet global mobile est un véhicule ferroviaire ou un train de véhicules constitué d'un véhicule à moteur et d'au moins une remorque.

18. Système suivant la revendication 10, **caractérisé en ce que** les dispositifs (T11 à T14, T21 à T24, T31 à T34) de communication radio sont des dispositifs de communication radio de même type.
